# EUROPEAN PATENT APPLICATION

(11) **EP 4 779 844 A1**
(43) Date of publication of application: **22.07.2026**
(21) Application number: 24897399.2
(22) Date of filing: 20.11.2024
(51) Int. Cl.: H02J 50/80, H02J 50/10

(54) **WIRELESS POWER SUPPLY SYSTEM AND WIRELESS POWER-RECEIVING DEVICE**

(30) Priority: 30.11.2023 JP 2023203114
(71) Applicant: Murata Manufacturing Co., Ltd., Nagaokakyo-shi, Kyoto 617-8555 (JP)
(72) Inventor: NAGAI, Takahiro, Nagaokakyo-shi, Kyoto 617-8555 (JP); HOSOTANI, Tatsuya, Nagaokakyo-shi, Kyoto 617-8555 (JP)
(74) Representative: Lorenz Seidler Gossel Part. mbB
(86) International application number: PCT/JP2024/041072
(87) International publication number: WO 2025/115713

(57) **Abstract**

A power receiving device (10) includes a power reception resonant circuit (11), a power reception rectifier circuit (12), a smoothing capacitor (13), and a control circuit (16). The power reception rectifier circuit (12) is electrically connected to the power reception resonant circuit (11) and rectifies alternating-current power received by a power receiving coil (111) constituting the power reception resonant circuit (11). The smoothing capacitor (13) is electrically connected to the power reception rectifier circuit (12) and smooths the power rectified by the power reception rectifier circuit (12) into a received direct-current voltage. The control circuit (16) is electrically connected to the power reception resonant circuit (11) and changes a state of electromagnetic resonant coupling through a rectifying operation of the power reception rectifier circuit (12). The control circuit (16) controls execution and stopping of the rectifying operation of the power reception rectifier circuit (12), on the basis of a control value set for the received direct-current voltage, such that a received voltage becomes a predetermined value. By adjusting the control value, the control circuit (16) controls the execution and stopping of the rectifying operation of the power reception rectifier circuit (12) to change the state of electromagnetic resonant coupling, and transmits information from the power receiving device (10) to execute information transmission to a power transmitting device (91).

## Description

### Technical Field

The present invention relates to a wireless power receiving device and a wireless power supply system including the wireless power receiving device.

### Background Art

Patent Document 1 describes a power receiving device having a power reception cutoff function. The power receiving device described in Patent Document 1 includes a voltage detecting circuit. If a voltage detected by the voltage detecting circuit is lower than or equal to a first threshold, the power receiving device performs a rated rectifying operation.

If the voltage detected by the voltage detecting circuit reaches a second threshold (> first threshold), the power receiving device stops the rated rectifying operation. This causes the power receiving device to stop the power receiving operation.

Patent Document 2 describes a wireless power supply system that transmits information between a wireless power receiving device and a wireless power transmitting device. A load circuit is connected to the wireless power receiving device.

In the wireless power supply system described in Patent Document 2, a resonance modulation circuit of the wireless power receiving device controls an input impedance seen from the wireless power transmitting device toward the load circuit. This causes electromagnetic coupling between the wireless power transmitting device and the wireless power receiving device to change, so that the wireless power transmitting device detects an electrical quantity resulting from this change to transmit information.

### Citation List

### Patent Document

Patent Document 1: Japanese Patent No. 6677306
Patent Document 2: International Publication No. 2017/213032

### Summary of Invention

### Technical Problem

However, in conventional power receiving devices of wireless power supply systems, such as those described in Patent Documents 1 and 2, attempting to simultaneously achieve both a received voltage control function and an information transmitting function results in a complex circuit configuration and an increased size. Moreover, power loss occurs in a circuit that controls a received voltage and this leads to reduced power efficiency.

Accordingly, an object of the present invention is to provide a wireless power receiving device that implements, with a simple configuration, a circuit capable of simultaneously achieving a received voltage control function and an information transmitting function, and has high power efficiency and high reliability.

### Solution to Problem

A wireless power supply system according to the present invention includes a power transmitting device that includes a power transmission resonant circuit including a power transmitting coil, and a power receiving device that includes a power reception resonant circuit including a power receiving coil. The wireless power supply system is configured to supply power by electromagnetic resonant coupling of the power reception resonant circuit with an electromagnetic field generated by the power transmission resonant circuit.

The power transmitting device includes the power transmission resonant circuit and further includes a transmission power converter circuit, a power transmission control circuit, and a power transmission detecting circuit.

The transmission power converter circuit is electrically connected to an input direct-current power supply, and converts direct-current power supplied from the input direct-current power supply into alternating-current power through a switching operation of a switching element to cause an alternating current to flow through the power transmitting coil electrically connected thereto. The power transmission control circuit controls a switching operation of the transmission power converter circuit. The power transmission detecting circuit detects an electrical quantity that varies in accordance with a change in a state of the electromagnetic resonant coupling.

The power receiving device includes the power reception resonant circuit and further includes a power reception rectifier circuit, a smoothing circuit, and a rectification control circuit. The power reception rectifier circuit is electrically connected to the power reception resonant circuit, and rectifies alternating-current power received by the power receiving coil constituting the power reception resonant circuit. The smoothing circuit is electrically connected to the power reception rectifier circuit, and smooths the power rectified by the power reception rectifier circuit into a received direct-current voltage. The rectification control circuit is electrically connected to the power reception resonant circuit, and changes the state of the power reception rectifier circuit through a rectifying operation of the electromagnetic resonant coupling.

The rectification control circuit controls execution and stopping of the rectifying operation of the power reception rectifier circuit, on the basis of a control value set for the received direct-current voltage, such that the received voltage becomes a predetermined value. The rectification control circuit controls execution and stopping of the rectifying operation of the power reception rectifier circuit, on the basis of a pattern for adjusting the control value, to change the state of the electromagnetic resonant coupling, and transmits information from the power receiving device to execute information transmission to the power transmitting device.

With this configuration, the wireless power receiving device can set a plurality of control values, and can control the received voltage and perform information transmission by adjusting the control values.

### Advantageous Effects of Invention

According to the present invention, the wireless power receiving device of the wireless power supply system can implement, with a simple configuration, a circuit capable of simultaneously achieving a received voltage control function and an information transmitting function, and can achieve high power efficiency and high reliability.

### Brief Description of Drawings

[Fig. 1] Fig. 1 is a diagram illustrating an example of a configuration of a power receiving device of a wireless power supply system according to a first embodiment of the present invention.
[Fig. 2] Fig. 2 is a diagram illustrating an example of a configuration of a power transmitting device of the wireless power supply system according to the first embodiment of the present invention.
[Fig. 3] Fig. 3(A) and Fig. 3(B) are circuit diagrams of a control circuit according to the first embodiment.
[Fig. 4] Fig. 4 is a table showing various states of power reception control and information transmission control.
[Fig. 5] Fig. 5 is a diagram illustrating data and waveforms used for information transmission.
[Fig. 6] Fig. 6(A), Fig. 6(B), Fig. 6(C), and Fig. 6(D) are diagrams illustrating examples of various waveforms in voltage control and information transmission control according to the first embodiment.
[Fig. 7] Fig. 7 is a diagram illustrating an example of a configuration of a power receiving device of a wireless power supply system according to a second embodiment of the present invention.
[Fig. 8] Fig. 8(A) and Fig. 8(B) are circuit diagrams of a control circuit according to the second embodiment.
[Fig. 9] Fig. 9 is a diagram illustrating an example of a configuration of a power receiving device of a wireless power supply system according to a third embodiment of the present invention.
[Fig. 10] Fig. 10(A) and Fig. 10(B) are circuit diagrams of a control circuit according to the third embodiment.
[Fig. 11] Fig. 11 is a diagram illustrating an example of a configuration of a power receiving device of a wireless power supply system according to a fourth embodiment of the present invention.
[Fig. 12] Fig. 12 is a diagram illustrating an example of a configuration of a power receiving device of a wireless power supply system according to a fifth embodiment of the present invention.
[Fig. 13] Fig. 13 is a diagram illustrating another embodiment of the power transmitting device.

### Description of Embodiments

### [First Embodiment]

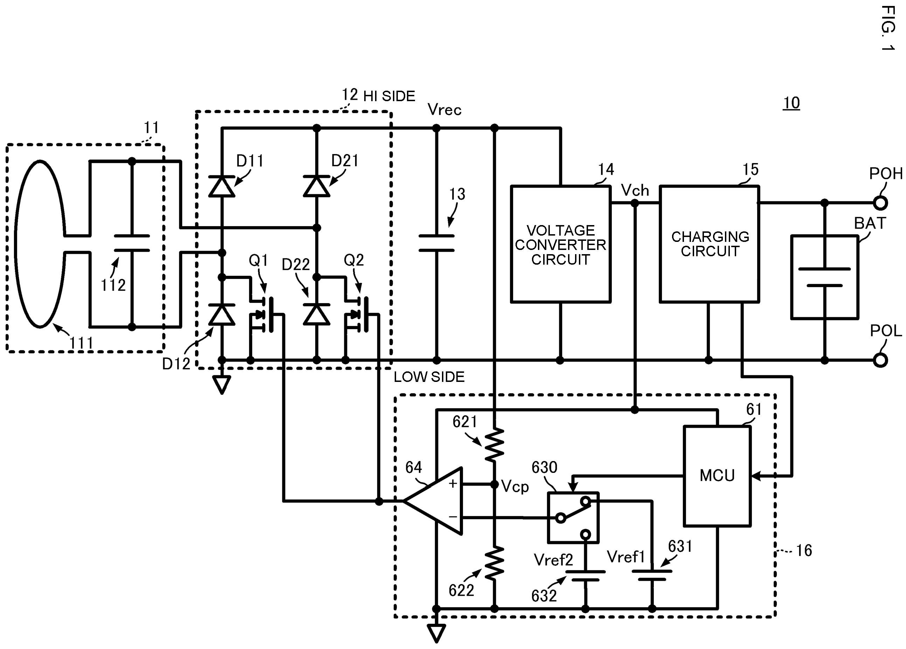

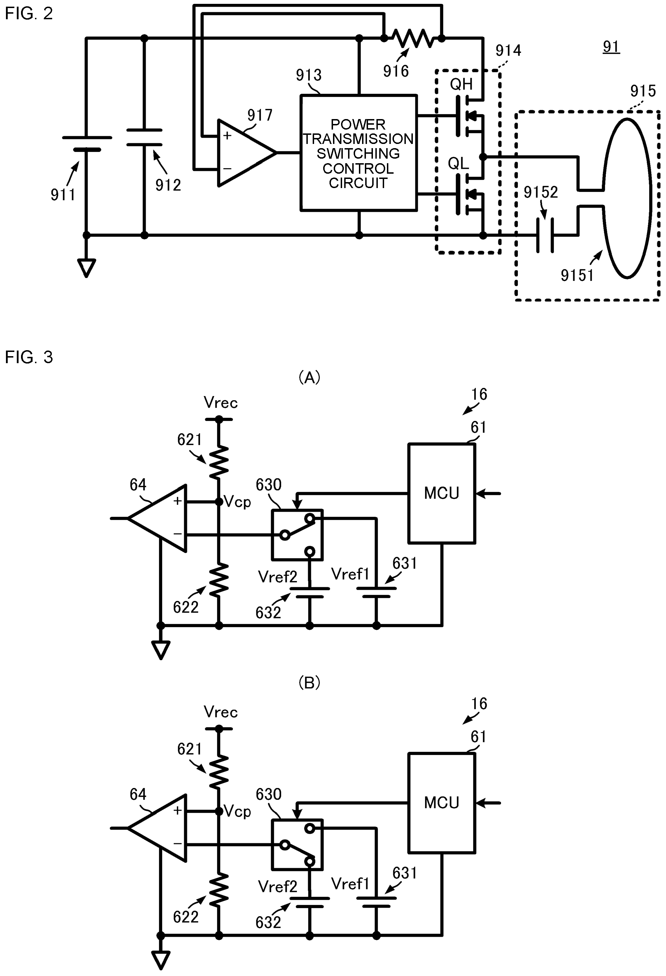

A wireless power supply system according to a first embodiment of the present invention will be described with reference to the drawings. Fig. 1 is a diagram illustrating an example of a configuration of a power receiving device of the wireless power supply system according to the first embodiment of the present invention. Fig. 2 is a diagram illustrating an example of a configuration of a power transmitting device of the wireless power supply system according to the first embodiment of the present invention.

### (Circuit configuration of power receiving device 10)

As illustrated in Fig. 1, a power receiving device 10 includes a power reception resonant circuit 11, a power reception rectifier circuit 12, a smoothing capacitor 13, a voltage converter circuit 14, a charging circuit 15, a control circuit 16, a battery BAT, a HI-side output terminal POH, and a LOW-side output terminal POL. The power receiving device 10 corresponds to a "wireless power receiving device" and the control circuit 16 corresponds to a "rectification control circuit".

The power reception resonant circuit 11 includes a power receiving coil 111 and a resonance capacitor 112. The resonance capacitor 112 and the power receiving coil 111 are connected in parallel. The power reception resonant circuit 11 thus constitutes a parallel resonant circuit of the power receiving coil 111 and the resonance capacitor 112. The resonant frequency of the power reception resonant circuit 11 is substantially the same as the frequency of an external alternating magnetic field with which the power receiving coil 111 is coupled, and is substantially the same as the driving frequency (switching frequency) of a power transmitting device 91.

The power reception rectifier circuit 12 includes a diode D11, a diode D12, a diode D21, and a diode D22 and constitutes a full-wave rectifier circuit. The diode D11 and the diode D12 are connected in series, and the diode D12 is connected to a reference potential. The diode D21 and the diode D22 are connected in series, and the diode D22 is connected to the reference potential.

A node between an anode of the diode D11 and a cathode of the diode D12 is connected to one output terminal of the power reception resonant circuit 11, and a node between an anode of the diode D21 and a cathode of the diode D22 is connected to the other output terminal of the power reception resonant circuit 11. A node between a cathode of the diode D11 and a cathode of the diode D21 is connected to a HI-side output terminal of the power reception rectifier circuit 12. A node between an anode of the diode D12 and an anode of the diode D22 is connected to a LOW-side output terminal of the power reception rectifier circuit 12.

A switching element Q1 is connected in parallel with the diode D12. A switching element Q2 is connected in parallel with the diode D22. The switching element Q1 and the switching element Q2 are switching elements using power semiconductors, and are constituted, for example, by FETs. The switching element Q1 and the switching element Q2 are power reception rectification control elements.

The smoothing capacitor 13 is connected between the HI-side output terminal and the LOW-side output terminal of the power reception rectifier circuit 12. The smoothing capacitor 13 corresponds to a "smoothing circuit".

A voltage across the smoothing capacitor 13 is a received voltage Vrec of the power receiving device 10. As will be described in detail below, the received voltage Vrec is a substantially direct-current voltage that varies within a predetermined range and corresponds to a "received direct-current voltage".

The HI-side output terminal of the power reception rectifier circuit 12 is connected to an input terminal of the voltage converter circuit 14. The voltage converter circuit 14 is connected to the reference potential. The voltage converter circuit 14 is constituted, for example, by a series regulator (linear regulator) or a DC-DC converter. An output terminal of the voltage converter circuit 14 is connected to an input terminal of the charging circuit 15. The voltage converter circuit 14 is provided where necessary. That is, the voltage converter circuit 14 may be omitted. In this case, the HI-side output terminal of the power reception rectifier circuit 12 is directly connected to the charging circuit 15.

The battery BAT is connected between a HI-side output terminal (terminal for a charging voltage Vch) of the charging circuit 15 and a LOW-side output terminal thereof (terminal connected to the reference potential). The battery BAT is a rechargeable secondary battery. The HI-side output terminal of the charging circuit 15 is connected to the HI-side output terminal POH of the power receiving device 10. The LOW-side output terminal of the charging circuit 15 is connected to the LOW-side output terminal POL of the power receiving device 10.

The control circuit 16 includes an MCU 61, a resistive element 621, a resistive element 622, a switch circuit 630, a reference voltage 631, a reference voltage 632, and a comparator 64. The reference voltage 631 and the reference voltage 632 are set as direct-current voltages.

The MCU 61 and the comparator 64 are connected to a node between the output terminal of the voltage converter circuit 14 and the input terminal of the charging circuit 15, and are connected to the reference potential. A drive voltage is thus applied to the MCU 61 and the comparator 64.

A signal input terminal of the MCU 61 is connected to the charging circuit 15. A control signal output terminal of the MCU 61 is connected to the switch circuit 630.

The switch circuit 630 has a common terminal, a first selection terminal, and a second selection terminal. The switch circuit 630 selects one of the first selection terminal and the second selection terminal in accordance with a control signal from the MCU 61, and connects the selected terminal to the common terminal. The common terminal of the switch circuit 630 is connected to an inverting input terminal of the comparator 64.

The reference voltage 631 is connected between the first selection terminal of the switch circuit 630 and the reference potential. In this case, a positive terminal of the reference voltage 631 is connected to the first selection terminal, and a negative terminal of the reference voltage 631 is connected to the reference potential.

The reference voltage 632 is connected between the second selection terminal of the switch circuit 630 and the reference potential. In this case, a positive terminal of the reference voltage 632 is connected to the second selection terminal, and a negative terminal of the reference voltage 632 is connected to the reference potential.

The resistive element 621 and the resistive element 622 are connected in series. The resistive element 621 is connected to a HI-potential-side terminal of the smoothing capacitor 13 (input terminal of the voltage converter circuit 14). The resistive element 622 is connected to the reference potential. A node between the resistive element 621 and the resistive element 622 is connected to a non-inverting input terminal of the comparator 64.

An output terminal of the comparator 64 is connected to a gate terminal of the switching element Q1 and a gate terminal of the switching element Q2.

### (Circuit configuration of power transmitting device 91)

As illustrated in Fig. 2, the power transmitting device 91 includes a direct-current power supply 911, an input capacitor 912, a power transmission switching control circuit 913, a transmission power converter circuit 914, a power transmission resonant circuit 915, a resistive element 916, and a differential amplifier circuit 917. The resistive element 916 and the differential amplifier circuit 917 constitute a "power transmission detecting circuit".

The input capacitor 912 is connected in parallel with the direct-current power supply 911. A drain terminal of a switching element QH of the transmission power converter circuit 914 is connected, via the resistive element 916, to a node between a positive terminal of the direct-current power supply 911 and the input capacitor 912. A drain terminal of a switching element QL is connected to a source terminal of the switching element QH. A source terminal of the switching element QL is connected to a node between a negative terminal of the direct-current power supply 911 and the input capacitor 912. The node between the negative terminal of the direct-current power supply 911 and the input capacitor 912 is connected to the reference potential.

A terminal of the resistive element 916 on the side of the direct-current power supply 911 is connected to a non-inverting input terminal of the differential amplifier circuit 917. A terminal of the resistive element 916 on the side of the transmission power converter circuit 914 is connected to an inverting input terminal of the differential amplifier circuit 917. An output terminal of the differential amplifier circuit 917 is connected to the power transmission switching control circuit 913.

The power transmission switching control circuit 913 is connected to a gate terminal of the switching element QH and a gate terminal of the switching element QL.

The power transmission resonant circuit 915 includes a power transmitting coil 9151 and a resonance capacitor 9152. One end of the power transmission resonant circuit 915 is connected to a node between the switching element QH and the switching element QL. The other end of the power transmission resonant circuit 915 is connected to a source terminal of the switching element QL.

The resonance capacitor 9152 is connected in series with the power transmitting coil 9151. The power transmission resonant circuit 915 thus constitutes a series resonant circuit of the power transmitting coil 9151 and the resonance capacitor 9152. The resonant frequency of the power transmission resonant circuit 915 is substantially the same as the switching frequency of the transmission power converter circuit 914.

### (Power supply control)

The power transmission switching control circuit 913 is connected to the direct-current power supply 911 and is driven in response to power supply from the direct-current power supply 911. The power transmission switching control circuit 913 may receive power supply via, for example, an LDO.

When determining that steady power supply is to be performed, the power transmission switching control circuit 913 generates a switching drive signal having a predetermined frequency and outputs the switching drive signal to the switching element QH and the switching element QL. Accordingly, the power transmission switching control circuit 913 performs switching control (on-off control) of the switching element QH and the switching element QL at the predetermined frequency (switching frequency).

The transmission power converter circuit 914 converts direct-current power supplied from the direct-current power supply 911 into alternating-current power having a frequency corresponding to the switching frequency through a switching operation (on-off switching operation) of the switching element QH and the switching element QL, and outputs an alternating current to the power transmission resonant circuit 915.

The power transmission resonant circuit 915 resonates at the frequency of the alternating current, and the power transmitting coil 9151 generates an alternating magnetic field based on the alternating current.

When the power receiving device 10 is placed, for charging, with respect to the power transmitting device 91, the power receiving coil 111 and the power transmitting coil 9151 are electromagnetically coupled. The power receiving coil 111 generates an alternating current in accordance with the degree of coupling with the alternating magnetic field, and outputs the alternating current to the power reception rectifier circuit 12.

Since the resonant frequency of the power reception resonant circuit 11 is substantially the same as the frequency of the alternating magnetic field, that is, the resonant frequency of the power transmission resonant circuit 915, the power reception resonant circuit 11 and the power transmission resonant circuit 915 are electromagnetically resonantly coupled. Low-loss wireless power supply from the power transmitting device 91 to the power receiving device 10 is thus achieved. The frequency of the alternating magnetic field for this wireless power supply is preferably in a 6.78 MHz band or in a 13.56 MHz band.

The power reception rectifier circuit 12 rectifies the received alternating current and outputs the rectified current. That is, the power reception rectifier circuit 12 rectifies alternating-current power received by the power reception resonant circuit 11 and outputs it.

The smoothing capacitor 13 smooths the rectified current and the rectified voltage, and outputs the direct-current received voltage Vrec to the voltage converter circuit 14.

The voltage converter circuit 14, for example, steps down the direct-current received voltage Vrec. The voltage converter circuit 14 thus converts the direct-current received voltage Vrec into the direct-current charging voltage Vch. The voltage converter circuit 14 outputs the charging voltage Vch to the charging circuit 15. The charging voltage Vch is also supplied as a drive voltage for the MCU 61 and the comparator 64 of the control circuit 16.

The charging circuit 15 generates a charging current for the battery BAT from the received charging voltage Vch and charges the battery BAT.

When an electronic load is connected to the HI-side output terminal POH and the LOW-side output terminal POL, the battery BAT supplies power through the HI-side output terminal POH and the LOW-side output terminal POL. If the power receiving device 10 is placed on the power transmitting device 91 and power is being supplied, the output voltage and the output current of the charging circuit 15 can be output to the electronic load through the HI-side output terminal POH and the LOW-side output terminal POL.

### (Received voltage control and information transmission)

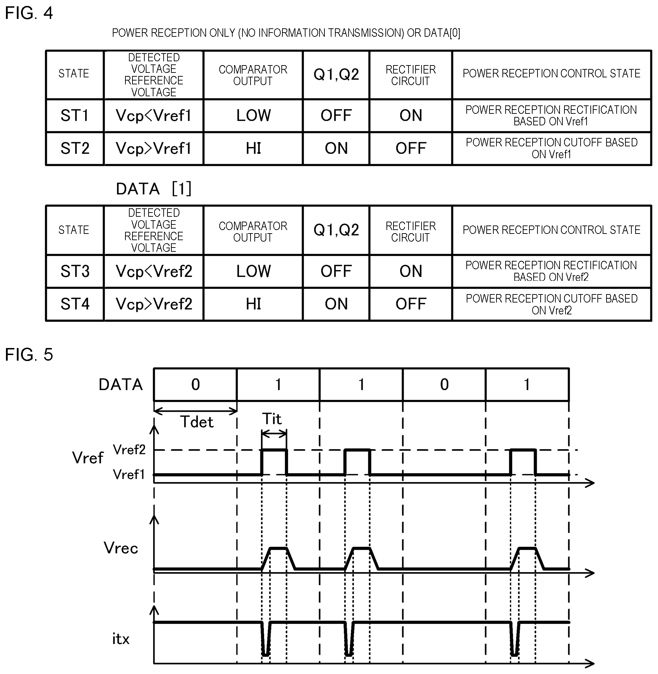

Fig. 3(A) and Fig. 3(B) are circuit diagrams of a control circuit according to the first embodiment. Fig. 3(A) and Fig. 3(B) differ in the selection state of a plurality of reference voltages. Fig. 4 is a table showing various states of power reception control and information transmission control. Fig. 5 is a diagram illustrating data and waveforms used for information transmission.

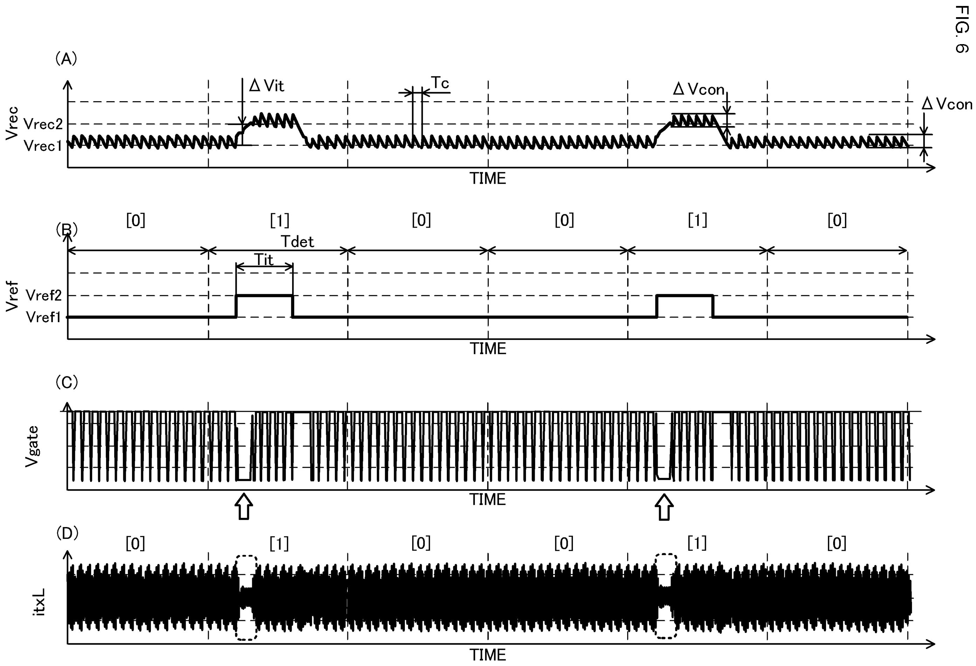

Fig. 6(A), Fig. 6(B), Fig. 6(C), and Fig. 6(D) are diagrams illustrating examples of various waveforms in voltage control and information transmission control according to the first embodiment. Fig. 6(A) illustrates a waveform of the received voltage Vrec, and Fig. 6(B) illustrates a waveform of the reference voltage. Fig. 6(C) illustrates a waveform of the gate voltage of the switching elements Q1 and Q2 of the power reception rectifier circuit 12, and Fig. 6(D) illustrates a waveform of transmission current.

### (Setting of reference voltage 631 and reference voltage 632)

The reference voltage 631 is a direct-current reference voltage capable of outputting a direct-current first reference voltage Vref1. The reference voltage 632 is a direct-current reference voltage capable of outputting a direct-current second reference voltage Vref2. The reference voltage 631 and the reference voltage 632 are constituted, for example, by shunt regulators. For example, the reference voltage 631 and the reference voltage 632 are generated by converting the received voltage Vrec. Alternatively, the reference voltage 631 and the reference voltage 632 may be generated, for example, from a primary battery.

The first reference voltage Vref1 is set to a voltage value for controlling the received voltage Vrec in the normal power supply control (power reception control) described above to a first received voltage Vrec1 (for example, 5.5 [V]) that is substantially constant. That is, the first reference voltage Vref1 is a voltage value for voltage control and voltage cutoff control in normal power supply control (power reception control).

The second reference voltage Vref2 is set to a voltage value higher than the first reference voltage Vref1. The second reference voltage Vref2 is set to a voltage value that enables information transmission during the power supply control described above. Note that the second reference voltage Vref2 is also used to control the received voltage Vrec to a second received voltage Vrec2 (for example, 6.0 [V]) that is substantially constant.

The first reference voltage Vref1 and the second reference voltage Vref2 correspond to a "control value".

### (Overview of power reception rectification control and power reception cutoff control)

The received voltage Vrec is applied to a voltage divider circuit constituted by a series circuit of the resistive element 621 and the resistive element 622 of the control circuit 16. A divided voltage generated by this voltage divider circuit (voltage at the node between the resistive element 621 and the resistive element 622) is a detected voltage Vcp. The detected voltage Vcp is supplied to the non-inverting input terminal of the comparator 64.

The first reference voltage Vref1 or the second reference voltage Vref2 is selectively supplied to the inverting input terminal of the comparator 64.

The comparator 64 compares a selected one of the first reference voltage Vref1 and the second reference voltage Vref2 with the detected voltage Vcp, generates a HI-level or LOW-level rectification control signal, and outputs the generated rectification control signal to the switching elements Q1 and Q2 of the power reception rectifier circuit 12.

The switching elements Q1 and Q2 of the power reception rectifier circuit 12 are controlled by the rectification control signal to be in an ON state (short-circuit state) or an OFF state (open state). This changes the circuit configuration of the power reception rectifier circuit 12 and allows switching between power reception rectification and power reception cutoff.

Specifically, when the switching elements Q1 and Q2 are controlled to be in the OFF state, the power reception rectifier circuit 12 forms a full-wave rectifier circuit constituted by the four diodes D11, D12, D21, and D22. The power reception rectifier circuit 12 thus performs power reception rectification.

On the other hand, when the switching elements Q1 and Q2 are controlled to be in the ON state, the power reception rectifier circuit 12 does not form a full-wave rectifier circuit. Accordingly, the power reception rectifier circuit 12 stops power reception rectification and performs power reception cutoff.

The power reception rectification and the power reception cutoff are performed both when the first reference voltage Vref1 is selected and when the second reference voltage Vref2 is selected.

### (Control based on first reference voltage Vref1: Fig. 3(A), upper table of Fig. 4, Fig. 6(A), Fig. 6(B), and Fig. 6(C))

When performing power reception but not information transmission, or when transmitting DATA[0] in information transmission, the MCU 61 controls the switch circuit 630 to electrically connect the inverting input terminal of the comparator 64 to the reference voltage 631. The first reference voltage Vref1 is thus supplied to the inverting input terminal of the comparator 64. Note that the MCU 61 determines to perform no information transmission or to transmit DATA[0] in information transmission on the basis of, for example, a charging state detected by the charging circuit 15.

The comparator 64 compares the detected voltage Vcp with the first reference voltage Vref1, generates a HI-level or LOW-level rectification control signal, and outputs the generated rectification control signal to the switching elements Q1 and Q2 of the power reception rectifier circuit 12.

More specifically, if the detected voltage Vcp is lower than the first reference voltage Vref1 (ST1 in Fig. 4), the comparator 64 generates a LOW-level rectification control signal and outputs it to the switching elements Q1 and Q2 of the power reception rectifier circuit 12.

When the LOW-level rectification control signal is received, the switching elements Q1 and Q2 of the power reception rectifier circuit 12 are controlled to be in the OFF state (open state). The power reception rectifier circuit 12 thus forms a full-wave rectifier circuit constituted by the four diodes D11, D12, D21, and D22, and performs power reception rectification based on the first reference voltage Vref1.

On the other hand, if the detected voltage Vcp is higher than the first reference voltage Vref1 (ST2 in Fig. 4), the comparator 64 generates a HI-level rectification control signal and outputs it to the switching elements Q1 and Q2 of the power reception rectifier circuit 12.

When the HI-level rectification control signal is received, the switching elements Q1 and Q2 of the power reception rectifier circuit 12 are controlled to be in the ON state (short-circuit state). Accordingly, the power reception rectifier circuit 12 does not form a full-wave rectifier circuit constituted by the four diodes D11, D12, D21, and D22. The power reception rectifier circuit 12 thus stops power reception rectification and performs power reception cutoff.

By repeating the power reception rectification and the power reception cutoff, as illustrated in Fig. 6(A), the power receiving device 10 can continue power reception at the first received voltage Vrec1 which is a substantially direct-current voltage having a voltage fluctuation range ΔVcon. In this case, by implementing the switching between the power reception rectification and the power reception cutoff with an analog circuit including a voltage divider circuit using resistive elements and a comparator, high-speed switching is possible. Accordingly, the voltage fluctuation range ΔVcon can be reduced, and the first received voltage Vrec1 becomes a substantially stable direct-current voltage.

### (Control based on second reference voltage Vref2: Fig. 3(B), lower table of Fig. 4, Fig. 6(A), Fig. 6(B), and Fig. 6(C))

When transmitting DATA[1] in information transmission, the MCU 61 controls the switch circuit 630 to electrically connect the inverting input terminal of the comparator 64 to the reference voltage 632. The second reference voltage Vref2 is thus supplied to the inverting input terminal of the comparator 64. Note that the MCU 61 determines, for example, to transmit DATA[1] in information transmission on the basis of the charging state detected by the charging circuit 15.

The comparator 64 compares the detected voltage Vcp with the second reference voltage Vref2, generates a HI-level or LOW-level rectification control signal, and outputs the generated rectification control signal to the switching elements Q1 and Q2 of the power reception rectifier circuit 12.

More specifically, if the detected voltage Vcp is lower than the second reference voltage Vref2 (ST3 in Fig. 4), the comparator 64 generates a LOW-level rectification control signal and outputs it to the switching elements Q1 and Q2 of the power reception rectifier circuit 12.

When the LOW-level rectification control signal is received, the switching elements Q1 and Q2 of the power reception rectifier circuit 12 are controlled to be in the OFF state (open state). The power reception rectifier circuit 12 thus forms a full-wave rectifier circuit constituted by the four diodes D11, D12, D21, and D22, and performs power reception rectification based on the second reference voltage Vref2.

On the other hand, if the detected voltage Vcp is higher than the second reference voltage Vref2 (ST4 in Fig. 4), the comparator 64 generates a HI-level rectification control signal and outputs it to the switching elements Q1 and Q2 of the power reception rectifier circuit 12.

When the HI-level rectification control signal is received, the switching elements Q1 and Q2 of the power reception rectifier circuit 12 are controlled to be in the ON state (short-circuit state). Accordingly, the power reception rectifier circuit 12 does not form a full-wave rectifier circuit constituted by the four diodes D11, D12, D21, and D22. The power reception rectifier circuit 12 thus stops power reception rectification and performs power reception cutoff.

By repeating the power reception rectification and the power reception cutoff, as illustrated in Fig. 6(A), the power receiving device 10 can receive power at the second received voltage Vrec2 which is a substantially direct-current voltage having the voltage fluctuation range ΔVcon.

In this case, by implementing the switching between the power reception rectification and the power reception cutoff with an analog circuit including a voltage divider circuit using resistive elements and a comparator, high-speed switching is possible. Accordingly, the voltage fluctuation range ΔVcon can be reduced, and the second received voltage Vrec2 becomes a substantially stable direct-current voltage.

The description above illustrates the case where the received voltage does not change abruptly and does not vary significantly. However, even when the power reception resonant circuit 11 receives an undesired abrupt large current (excessive current), the power reception cutoff described above is performed. Therefore, even if an undesired abrupt input current is received, the power receiving device 10 can maintain a stable direct-current voltage (the first received voltage Vrec1 or the second received voltage Vrec2).

### (Information transmission to power transmitting device 91: Fig. 5, Fig. 6(B), Fig. 6(C), and Fig. 6(D))

When the MCU 61 determines that information transmission of DATA[1] to the power transmitting device 91 is required, the MCU 61 switches from the selection state of the first reference voltage Vref1 to the selection state of the second reference voltage Vref2. The MCU 61 maintains the second reference voltage Vref2 for a predetermined second reference voltage selection time Tit, and then switches from the selection state of the second reference voltage Vref2 to the selection state of the first reference voltage Vref1.

In this case, as illustrated in Fig. 5 and Fig. 6(B), in the wireless power supply system including the power receiving device 10 and the power transmitting device 91, the second reference voltage selection time Tit is set shorter than a data detection period Tdet used for information transmission from the power receiving device 10 to the power transmitting device 91.

Here, the second reference voltage Vref2 is set with respect to the first reference voltage Vref1 such that a potential difference ΔVit between the first received voltage Vrec1 (voltage based on the first reference voltage Vref1) and the second received voltage Vrec2 (voltage based on the second reference voltage Vref2) is greater than the voltage fluctuation range ΔVcon of the first received voltage Vrec1 and the second received voltage Vrec2.

Therefore, when the first reference voltage Vref1 switches to the second reference voltage Vref2, the detected voltage Vcp falls below the second reference voltage Vref2 at this time. Accordingly, the comparator 64 outputs a LOW-level power reception rectification signal to the switching elements Q1 and Q2.

The control circuit 16 thus controls the level (voltage) of the power reception rectification signal to be output to the switching elements Q1 and Q2. The control circuit 16 sets a control pattern for the switching elements Q1 and Q2 by varying the control value over time for adjustment. On the basis of this control pattern, the control circuit 16 adjusts the level (control value) of the power reception rectification signal to control the on-off of the switching elements Q1 and Q2.

When a LOW-level power reception control signal is received, the switching elements Q1 and Q2 each function as a switch element that determines whether to perform or stop a rectifying operation at a switching frequency (frequency of the alternating magnetic field). By performing and stopping the rectifying operation, an impedance at the switching frequency (frequency of the alternating magnetic field), as seen from the power transmission resonant circuit 915 of the power transmitting device 91 toward the power reception resonant circuit 11 of the power receiving device 10, changes.

This changes the state of resonance between the power transmission resonant circuit 915 and the power reception resonant circuit 11 and, as illustrated in Fig. 5 and Fig. 6(D), the amplitudes of a transmission current itx flowing through the power transmission resonant circuit 915 and a power transmitting coil current itxL flowing through the power transmitting coil 9151 change significantly. The amplitudes may either decrease or increase, depending on the constant settings of resonance parameters.

When the amplitude of the transmission current itx changes significantly, a voltage across the resistive element 916 of the power transmitting device 91 also changes significantly. This changing voltage across the resistive element 916 corresponds to an "electrical quantity". The electrical quantity is not limited to voltage and may be current. The potential difference between the non-inverting input terminal and the inverting input terminal of the differential amplifier circuit 917 thus changes significantly, and the waveform (amplitude) of an output signal of the differential amplifier circuit 917 changes.

By detecting a change in the waveform (amplitude) of the output signal of the differential amplifier circuit 917, the power transmission switching control circuit 913 can detect DATA[1] from the power receiving device 10.

With the configuration described above, the wireless power supply system can perform information transmission of DATA[1] from the power receiving device 10 to the power transmitting device 91.

Moreover, as illustrated in Fig. 5 and Fig. 6(D), by failing to detect a change in the waveform (amplitude) of the output signal of the differential amplifier circuit 917 during the data detection period Tdet, the wireless power supply system can perform information transmission of DATA[0] from the power receiving device 10 to the power transmitting device 91.

As described above, the wireless power supply system including the power transmitting device 91 and the power receiving device 10 can perform information transmission from the power receiving device 10 to the power transmitting device 91.

Also, the wireless power supply system can perform information transmission while performing the received voltage control and the power reception cutoff control described above.

Additionally, in the configuration described above, the second reference voltage Vref2 is set such that (potential difference ΔVit between first received voltage Vrec1 and second received voltage Vrec2) > (voltage fluctuation range ΔVcon) (for example, about two to three times in the case of Fig. 6). Consequently, when switching from the first reference voltage Vref1 to the second reference voltage Vref2, the wireless power supply system can prevent the detected voltage Vcp from becoming undesirably larger than the second reference voltage Vref2 resulting from the power reception control. Similarly, when switching from the second reference voltage Vref2 to the first reference voltage Vref1, the wireless power supply system can prevent the detected voltage Vcp from becoming undesirably smaller than the first reference voltage Vref1 resulting from the power reception control. Accordingly, the wireless power supply system can suppress erroneous operation in information transmission.

The voltage fluctuation range ΔVcon can be set (adjusted) in accordance with the capacitance of the smoothing capacitor 13 and the delay time from voltage detection to switch control in the control circuit 16.

In the configuration described above, the second reference voltage selection time Tit is set longer than a switching period Tc in received voltage control by a predetermined multiple (for example, about 10 times longer in the case of Fig. 6). This allows the power receiving device 10 to maintain the time for changing the impedance for information transmission of DATA[1] at a level detectable by the power transmitting device 91. Accordingly, the wireless power supply system can more reliably transmit DATA[1] from the power receiving device 10 to the power transmitting device 91.

In the configuration described above, the second reference voltage selection time Tit is shorter than the data detection period Tdet for information transmission by a predetermined amount (for example, about 1/3 in the case of Fig. 6). This allows the wireless power supply system to minimize the time during which the received voltage Vrec unnecessarily increases, within a range which allows information transmission. Therefore, the wireless power supply system can achieve highly efficient power reception (power supply).

In the configuration described above, the detected voltage Vcp, which is a divided voltage obtained by dividing the received voltage Vrec, is used. Here, for example, the resistance value of the resistive element 622 connected to the reference potential is made smaller than the resistance value of the resistive element 621. This can lower the detected voltage Vcp. The first reference voltage Vref1 and the second reference voltage Vref2 can thus be lowered. Therefore, for example, the reference voltages 631 and 632 can be reduced in size, and the power receiving device 10 can be reduced in size.

In the configuration described above, the received voltage Vrec increases when the second reference voltage Vref2 is selected. This energy is stored in the smoothing capacitor 13 and supplied to a load (or circuit downstream of the smoothing capacitor 13) when the voltage returns to the first reference voltage Vref1. Accordingly, the power receiving device 10 can reduce power loss associated with information transmission and reduce heat generation.

In conventional configurations, the received voltage may decrease due to load modulation during information transmission or temporary suspension of power reception. In the power receiving device 10 having the configuration described above, however, the received voltage Vrec does not decrease (and increases) during information transmission, so that a more stable operation is possible.

### [Second Embodiment]

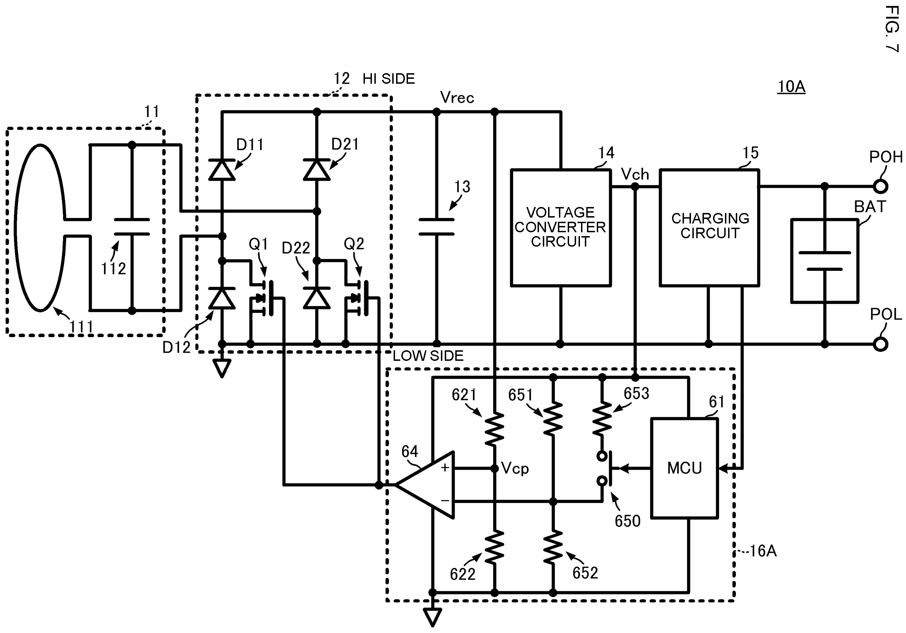

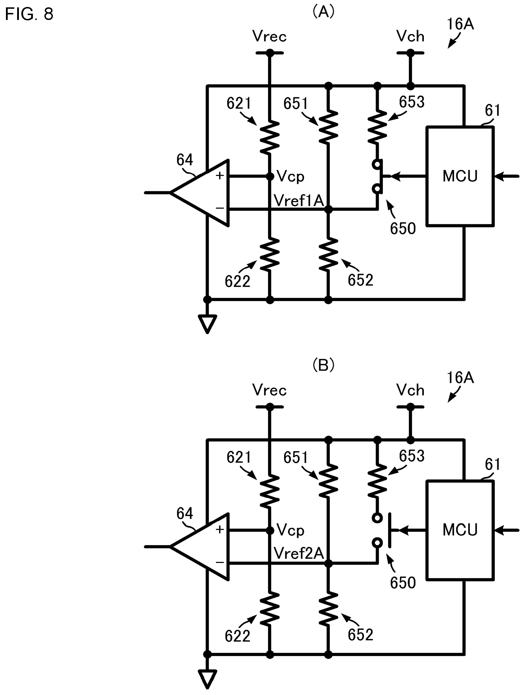

A wireless power supply system according to a second embodiment of the present invention will be described with reference to the drawings. Fig. 7 is a diagram illustrating an example of a configuration of a power receiving device of the wireless power supply system according to the second embodiment of the present invention. Fig. 8(A) and Fig. 8(B) are circuit diagrams of a control circuit according to the second embodiment.

As illustrated in Fig. 7, Fig. 8(A), and Fig. 8(B), the wireless power supply system according to the second embodiment differs from the wireless power supply system according to the first embodiment in the configuration of a power receiving device 10A. In the following description, only parts of the power receiving device 10A that differ from the power receiving device 10 according to the first embodiment will be described, and the description of similar parts will be omitted.

The power receiving device 10A includes a control circuit 16A. Generally, the control circuit 16A differs from the control circuit 16 in that the control circuit 16A does not use a reference voltage but uses a voltage divider circuit including resistive elements.

The control circuit 16A includes the MCU 61, the resistive element 621, the resistive element 622, a resistive element 651, a resistive element 652, a resistive element 653, and a switch circuit 650.

The MCU 61 and the comparator 64 are connected to the node between the output terminal of the voltage converter circuit 14 and the input terminal of the charging circuit 15, and are connected to the reference potential. The control signal output terminal of the MCU 61 is connected to the switch circuit 650.

The resistive element 621 and the resistive element 622 are connected in series. The resistive element 621 is connected to the HI-potential-side terminal of the smoothing capacitor 13 (input terminal of the voltage converter circuit 14). The resistive element 622 is connected to the reference potential. The node between the resistive element 621 and the resistive element 622 is connected to the non-inverting input terminal of the comparator 64.

The resistive element 651 and the resistive element 652 are connected in series. The resistive element 651 is connected to the node between the output terminal of the voltage converter circuit 14 and the input terminal of the charging circuit 15. The resistive element 652 is connected to the reference potential. A node between the resistive element 651 and the resistive element 652 is connected to the inverting input terminal of the comparator 64.

The resistive element 653 and the switch circuit 650 are connected in series. A series circuit of the resistive element 653 and the switch circuit 650 is connected in parallel with the resistive element 651.

When performing control using a first reference voltage Vref1A, the MCU 61 controls, for example, the switch circuit 650 to be in the OFF state (open state). As a result, the first reference voltage Vref1A becomes a divided voltage generated by a voltage divider circuit including the resistive element 651 and the resistive element 652.

When performing control using a second reference voltage Vref2A (> Vref1A), the MCU 61 controls, for example, the switch circuit 650 to be in the ON state (short-circuit state). As a result, the second reference voltage Vref2A becomes a divided voltage generated by a voltage divider circuit including a parallel circuit of the resistive element 651 and the resistive element 653, and the resistive element 652.

With this configuration, the control circuit 16A can adjust the input voltage of the inverting input terminal of the comparator 64 to one of two values. Therefore, the power receiving device 10A and the wireless power supply system including the power receiving device 10A can achieve effects similar to those of the power receiving device 10 and the wireless power supply system including the power receiving device 10.

The power receiving device 10A does not need to include the reference voltages 631 and 632, and the circuit configuration can be simplified and the size reduction can be achieved.

### [Third Embodiment]

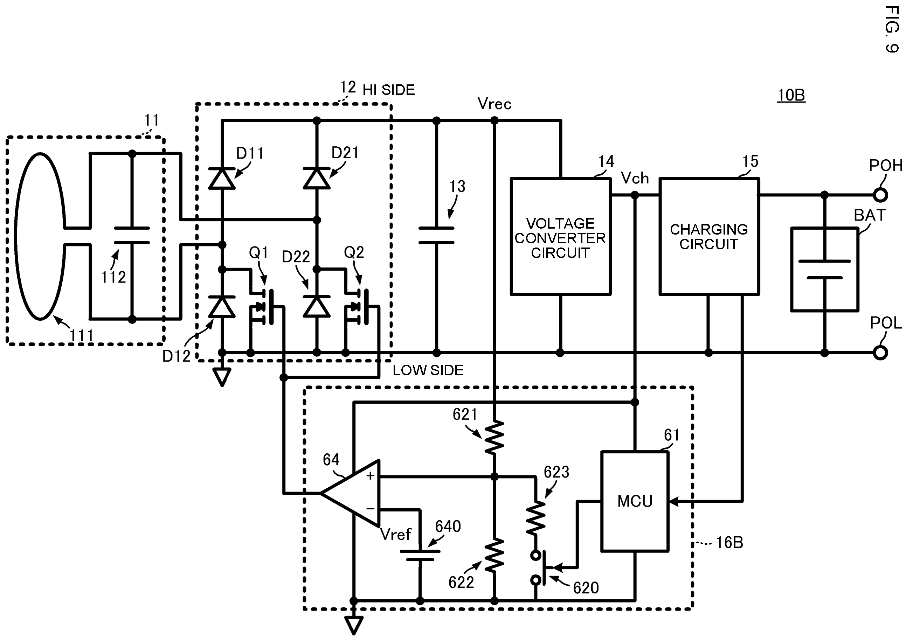

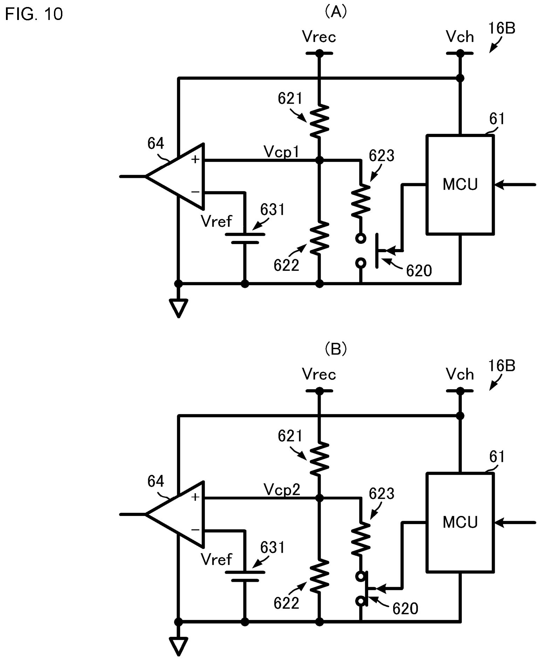

A wireless power supply system according to a third embodiment of the present invention will be described with reference to the drawings. Fig. 9 is a diagram illustrating an example of a configuration of a power receiving device of the wireless power supply system according to the third embodiment of the present invention. Fig. 10(A) and Fig. 10(B) are circuit diagrams of a control circuit according to the third embodiment.

As illustrated in Fig. 9, Fig. 10(A), and Fig. 10(B), the wireless power supply system according to the third embodiment differs from the wireless power supply system according to the first embodiment in the configuration of a power receiving device 10B. In the following description, only parts of the power receiving device 10B that differ from the power receiving device 10 according to the first embodiment will be described, and the description of similar parts will be omitted.

The power receiving device 10B includes a control circuit 16B. Generally, the control circuit 16B differs from the control circuit 16 in that, to achieve information transmission, the control circuit 16B switches a voltage division ratio with respect to the received voltage without changing the reference voltage.

The control circuit 16B includes the MCU 61, the resistive element 621, the resistive element 622, a resistive element 623, a switch circuit 620, and a reference voltage 640.

The MCU 61 and the comparator 64 are connected to the node between the output terminal of the voltage converter circuit 14 and the input terminal of the charging circuit 15, and are connected to the reference potential. The control signal output terminal of the MCU 61 is connected to the switch circuit 620.

The reference voltage 640 is connected between the inverting input terminal of the comparator 64 and the reference potential.

The resistive element 621 and the resistive element 622 are connected in series. The resistive element 621 is connected to the HI-potential-side terminal of the smoothing capacitor 13 (input terminal of the voltage converter circuit 14). The resistive element 622 is connected to the reference potential. The node between the resistive element 621 and the resistive element 622 is connected to the non-inverting input terminal of the comparator 64.

The resistive element 623 and the switch circuit 620 are connected in series. A series circuit of the resistive element 623 and the switch circuit 620 is connected in parallel with the resistive element 622.

When performing control using a first detected voltage Vcp1, the MCU 61 controls, for example, the switch circuit 620 to be in the OFF state (open state). As a result, the first detected voltage Vcp1 becomes a divided voltage generated by a voltage divider circuit including the resistive element 622 and the resistive element 621.

When performing control using a second detected voltage Vcp2 (> Vcp1), the MCU 61 controls, for example, the switch circuit 620 to be in the ON state (short-circuit state). As a result, the second detected voltage Vcp2 becomes a divided voltage generated by a voltage divider circuit including a parallel circuit of the resistive element 622 and the resistive element 623, and the resistive element 621.

By performing this control, even when the received voltage Vrec is the same, the first detected voltage Vcp1 is higher than the second detected voltage Vcp2. This generates a difference between the first detected voltage Vcp1 and the second detected voltage Vcp2 with respect to the reference voltage Vref. Accordingly, the control circuit 16B can perform control similar to that performed by the control circuit 16.

With this configuration, the control circuit 16B can adjust the input voltage of the inverting input terminal of the comparator 64 to one of two values. Therefore, the power receiving device 10B and the wireless power supply system including the power receiving device 10B can achieve effects similar to those of the power receiving device 10 and the wireless power supply system including the power receiving device 10.

### [Fourth Embodiment]

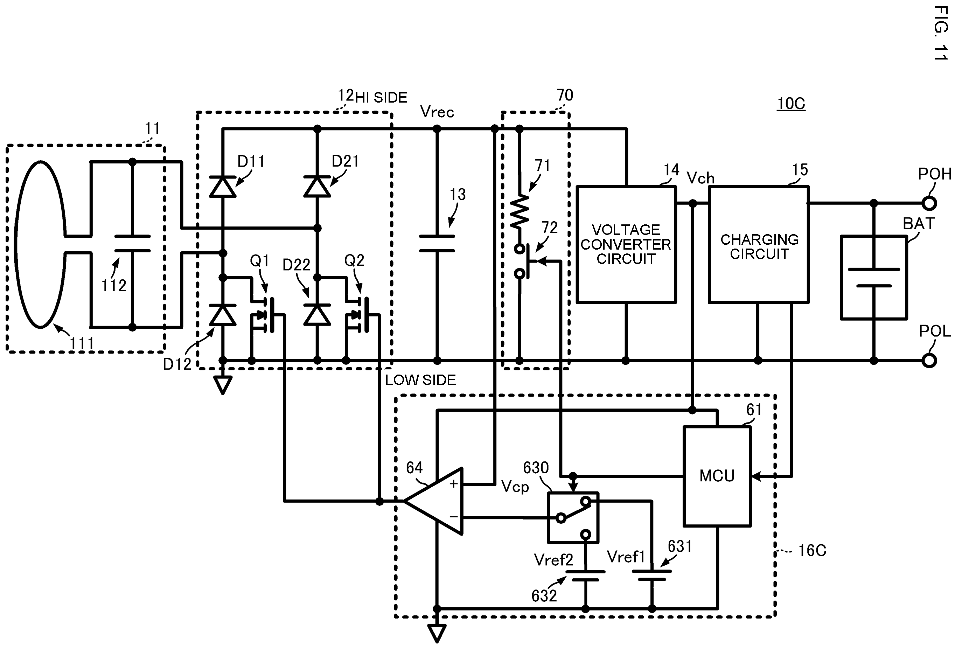

A wireless power supply system according to a fourth embodiment of the present invention will be described with reference to the drawings. Fig. 11 is a diagram illustrating an example of a configuration of a power receiving device of the wireless power supply system according to the fourth embodiment of the present invention.

As illustrated in Fig. 11, the wireless power supply system according to the fourth embodiment differs from the wireless power supply system according to the first embodiment in the configuration of a power receiving device 10C, and in that it includes a load adjusting circuit 70. In the following description, only parts of the power receiving device 10C that differ from the power receiving device 10 according to the first embodiment will be described, and the description of similar parts will be omitted.

The power receiving device 10C includes a control circuit 16C and the load adjusting circuit 70. The control circuit 16C differs from the control circuit 16 in that the MCU 61 performs switch control of the switch circuit 630 and also performs switch control of the load adjusting circuit 70.

The load adjusting circuit 70 includes a resistive element 71 and a switch circuit 72. The resistive element 71 and the switch circuit 72 are connected in series. The load adjusting circuit 70 (or series circuit of the resistive element 71 and the switch circuit 72) is connected in parallel with the smoothing capacitor 13. In other words, the load adjusting circuit 70 is connected between both output terminals of the power reception rectifier circuit 12.

When the MCU 61 does not transmit DATA[1] and performs power reception only, the MCU 61 controls the switch circuit 72 to be in the OFF state (open state). This can suppress power loss due to the resistive element 71 during power reception in the power receiving device 10C.

When transmitting DATA[1], the MCU 61 controls the switch circuit 72 to be in the ON state (short-circuit state). When the switch circuit 72 is controlled to be in the ON state (short-circuit state), an impedance seen from the power transmission resonant circuit 915 toward the power reception resonant circuit 11 changes even more significantly due to addition of a component of the resistive element 71. This can increase the displacement of the transmission current itx during transmission of DATA[1]. Therefore, the power transmitting device 91 can more reliably detect DATA[1].

Thus, the power receiving device 10C can achieve effects similar to those of the power receiving device 10, and can also achieve information transmission more reliably.

### [Fifth Embodiment]

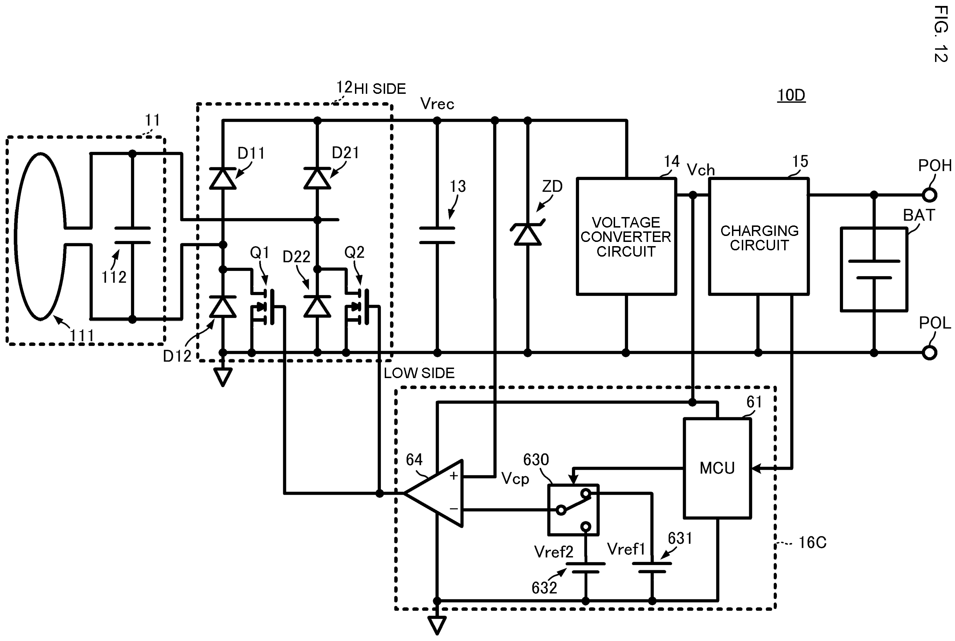

A wireless power supply system according to a fifth embodiment of the present invention will be described with reference to the drawings. Fig. 12 is a diagram illustrating an example of a configuration of a power receiving device of the wireless power supply system according to the fifth embodiment of the present invention.

As illustrated in Fig. 12, the wireless power supply system according to the fifth embodiment differs from the wireless power supply system according to the fourth embodiment in that the load adjusting circuit 70 is replaced with a Zener diode ZD. In the following description, only different parts will be described, and the description of similar parts will be omitted.

The Zener diode ZD is connected in parallel with the smoothing capacitor 13. The Zener diode ZD is connected at a cathode thereof to the HI side and connected at an anode thereof to the LOW side.

A Zener voltage of the Zener diode ZD is set higher than the first received voltage Vrec1 and lower than the second received voltage Vrec2.

With this configuration, the power receiving device 10D can achieve effects similar to those of the power receiving device 10C.

Furthermore, in the power receiving device 10D, a current flowing during the second reference voltage selection time Tit increases. This allows the power receiving device 10D to increase the displacement of the transmission current itx during transmission of DATA[1]. In this case, the received voltage Vrec during the period of the second reference voltage selection time Tit is not the second received voltage Vrec2, but is a voltage based on the Zener voltage. However, if received power is large, the received voltage Vrec is not a voltage based on the Zener voltage, but is limited to the second received voltage Vrec2.

### (Another embodiment of power transmitting device)

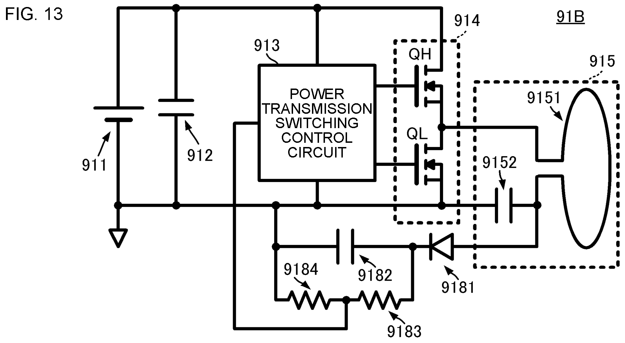

Fig. 13 is a diagram illustrating another embodiment of the power transmitting device. A power transmitting device 91B illustrated in Fig. 13 differs from the power transmitting device 91 illustrated in Fig. 2 in that the power transmitting device 91B detects information (data) from the power receiving device 10 by using a voltage applied to the power transmission resonant circuit 915. The following will describe only differences of the power transmitting device 91B from the power transmitting device 91.

The power transmitting device 91B includes the direct-current power supply 911, the input capacitor 912, the power transmission switching control circuit 913, the transmission power converter circuit 914, the power transmission resonant circuit 915, a rectifier element 9181, a capacitor 9182, a resistive element 9183, and a resistive element 9184. The rectifier element 9181, the capacitor 9182, the resistive element 9183, and the resistive element 9184 constitute a "power transmission detecting circuit".

The rectifier element 9181 is a diode. An anode terminal of the diode is connected to a node between the power transmitting coil 9151 and the resonance capacitor 9152. A cathode terminal of the diode is connected via the capacitor 9182 to the reference potential.

The resistive element 9183 and the resistive element 9184 are connected in series. A series circuit of the resistive element 9183 and the resistive element 9184 is connected in parallel with the capacitor 9182. A node between the resistive element 9183 and the resistive element 9184 is connected to the power transmission switching control circuit 913.

With this configuration, when the transmission current itx changes, a voltage (power transmission voltage) applied to the capacitor 9182 changes. The power transmission voltage is divided by a voltage divider circuit including the resistive element 9183 and the resistive element 9184, and is supplied to the power transmission switching control circuit 913. This enables the power transmission switching control circuit 913 to detect a change in the power transmission voltage, and to detect information (data) from the power receiving device 10 on the basis of this change.

### Reference Signs List

- 10, 10A, 10B, 10C, 10D:: power receiving device
- 11:: power reception resonant circuit
- 12:: power reception rectifier circuit
- 13:: smoothing capacitor
- 14:: voltage converter circuit
- 15:: charging circuit
- 16, 16A, 16B, 16C:: control circuit
- 61:: MCU
- 64:: comparator
- 70:: load adjusting circuit
- 71:: resistive element
- 72:: switch circuit
- 91, 91B:: power transmitting device
- 111:: power receiving coil
- 112:: resonance capacitor
- 620:: switch circuit
- 621, 622, 623, 651, 652, 653:: resistive element
- 630:: switch circuit
- 631, 632, 640:: reference voltage
- 650:: switch circuit
- 911:: direct-current power supply
- 912:: input capacitor
- 913:: power transmission switching control circuit
- 914:: transmission power converter circuit
- 915:: power transmission resonant circuit
- 916, 9183, 9184:: resistive element
- 917:: differential amplifier circuit
- 9151:: power transmitting coil
- 9152:: resonance capacitor
- 9181:: rectifier element
- 9182:: capacitor
- BAT:: battery
- D11, D12, D21, D22:: diode
- itx:: transmission current
- POH:: HI-side output terminal
- POL:: LOW-side output terminal
- Q1, Q2, QH, QL:: switching element
- ZD:: Zener diode
- Tc:: switching period
- Tdet:: detection period
- Tit:: second reference voltage selection time
- Vch:: charging voltage
- Vcp:: detected voltage
- Vcp1:: first detected voltage
- Vcp2:: second detected voltage
- Vrec:: received voltage
- Vrec1:: first received voltage
- Vrec2:: second received voltage
- Vref:: reference voltage
- Vref1, Vref1A:: first reference voltage
- Vref2, Vref2A:: second reference voltage

## Claims

1. A wireless power supply system comprising a power transmitting device including a power transmission resonant circuit including a power transmitting coil; and a power receiving device including a power reception resonant circuit including a power receiving coil, the wireless power supply system being configured to supply power by electromagnetic resonant coupling of the power reception resonant circuit with an electromagnetic field generated by the power transmission resonant circuit, wherein
the power transmitting device includes
a transmission power converter circuit electrically connected to an input direct-current power supply, and configured to convert direct-current power supplied from the input direct-current power supply into alternating-current power through a switching operation of a switching element to cause an alternating current to flow through the power transmitting coil electrically connected thereto,
a power transmission control circuit configured to control a switching operation of the transmission power converter circuit, and
a power transmission detecting circuit configured to detect an electrical quantity that varies in accordance with a change in a state of the electromagnetic resonant coupling;
the power receiving device includes
a power reception rectifier circuit electrically connected to the power reception resonant circuit and configured to rectify alternating-current power received by the power receiving coil constituting the power reception resonant circuit,
a smoothing circuit electrically connected to the power reception rectifier circuit and configured to smooth the power rectified by the power reception rectifier circuit into a received direct-current voltage, and
a rectification control circuit electrically connected to the power reception resonant circuit and configured to change the state of the electromagnetic resonant coupling through a rectifying operation of the power reception rectifier circuit; and
the rectification control circuit
controls execution and stopping of the rectifying operation of the power reception rectifier circuit, on the basis of a control value set for the received direct-current voltage, such that the received direct-current voltage becomes a predetermined value, and
controls execution and stopping of the rectifying operation of the power reception rectifier circuit, on the basis of a pattern for adjusting the control value, to change the state of the electromagnetic resonant coupling, and transmits information from the power receiving device to execute information transmission to the power transmitting device.

2. The wireless power supply system according to claim 1, wherein the rectification control circuit stops the rectifying operation to cut off power reception when the received direct-current voltage exceeds a predetermined range.

3. The wireless power supply system according to claim 1 or claim 2, wherein the control value for the received voltage used for the information transmission is one of two values.

4. The wireless power supply system according to any one of claim 1 to claim 3, wherein the rectification control circuit includes
a comparator configured to compare a detected voltage based on the received voltage with a reference voltage, and
a switching control circuit configured to switch the reference voltage to create a change in the state of the electromagnetic resonant coupling.

5. The wireless power supply system according to claim 3, wherein
the reference voltage is configured using a resistive voltage divider circuit; and
the switching control circuit switches the reference voltage using a semiconductor switch element.

6. The wireless power supply system according to any one of claim 1 to claim 3, wherein
the rectification control circuit includes
a comparator configured to compare a detected voltage based on the received voltage with a reference voltage, and
a switching control circuit configured to switch the detected voltage to create a change in the state of the electromagnetic resonant coupling;
the detected voltage is configured using a resistive voltage divider circuit; and
the switching control circuit is configured switches the detected voltage using a semiconductor switch element.

7. The wireless power supply system according to claim 1, wherein
the power receiving device includes a load adjusting circuit capable of changing an impedance seen from the power transmitting device toward the power reception rectifier circuit; and
the rectification control circuit changes a load of the power reception rectifier circuit using the load adjusting circuit to change the state of the electromagnetic resonant coupling.

8. The wireless power supply system according to any one of claim 1 to claim 6, wherein
the power receiving device includes a Zener diode connected in parallel with the smoothing circuit; and
the rectification control circuit controls execution and stopping of the rectifying operation of the power reception rectifier circuit on the basis of a Zener voltage.

9. The wireless power supply system according to any one of claim 1 to claim 8, wherein a frequency of electromagnetic resonance is in a 6.78 MHz band or a 13.56 MHz band.

10. A wireless power receiving device comprising:
a power reception resonant circuit including a power receiving coil and configured to receive power by electromagnetic resonant coupling with an electromagnetic field generated by a power transmitting device;
a power reception rectifier circuit electrically connected to the power reception resonant circuit and configured to rectify alternating-current power received by the power reception resonant circuit;
a smoothing circuit electrically connected to the power reception rectifier circuit and configured to smooth the power rectified by the power reception rectifier circuit into a received direct-current voltage; and
a rectification control circuit electrically connected to the power reception resonant circuit and configured to change a state of electromagnetic resonant coupling through a rectifying operation of the power reception rectifier circuit,
wherein the rectification control circuit
controls execution and stopping of the rectifying operation of the power reception rectifier circuit, on the basis of a control value set for the received direct-current voltage, such that the received direct-current voltage becomes a predetermined value, and
controls execution and stopping of the rectifying operation of the power reception rectifier circuit, on the basis of a pattern for adjusting the control value, to change the state of the electromagnetic resonant coupling, and transmits information from the power receiving device to execute information transmission to the power transmitting device.
